# EUROPÄISCHE PATENTSCHRIFT

(11) **EP 3 841 334 B1**
(45) Veröffentlichungstag und Bekanntmachung des Hinweises auf die Patenterteilung: **21.09.2022**
(21) Anmeldenummer: 19752495.2
(22) Anmeldetag: 09.08.2019
(51) Int. Cl.: F24H 9/1863, F24H 9/1881, F28D 21/00, F28F 1/16, F24H 3/04

(54) **HEIZVORRICHTUNG ZUM ERWÄRMEN VON LUFT**
HEATING DEVICE FOR HEATING AIR
DISPOSITIF DE CHAUFFAGE POUR LE CHAUFFAGE D'AIR

(30) Priorität: 21.08.2018 DE 102018006595
(43) Veröffentlichungstag der Anmeldung: 30.06.2021
(73) Patentinhaber: Truma Gerätetechnik GmbH & Co. KG, 85640 Putzbrunn (DE)
(72) Erfinder: ARMBRUSTER, Uwe, 85640 Putzbrunn (DE); JÄGER, Markus, 85640 Putzbrunn (DE); LAGING, Johannes, 85640 Putzbrunn (DE)
(74) Vertreter: Prinz & Partner mbB
(86) Internationale Anmeldenummer: PCT/EP2019/071407
(87) Internationale Veröffentlichungsnummer: WO 2020/038736

(56) Entgegenhaltungen:
- EP-A1- 3 269 572
- WO-A2-2011/029826
- DE-A1-102011 085 076
- KR-A- 20160 114 860
- KR-B1- 101 880 932

## Beschreibung

Die Erfindung bezieht sich auf eine Heizvorrichtung zum Erwärmen von Luft. Die Heizvorrichtung kann dabei Teil einer Raumheizung sein. Beispielsweise dient das Erwärmen der Luft der Erwärmung oder Erhitzung eines weiteren Mediums, z. B. Brauchwasser, sodass die Luft nur ein Zwischenmedium für die Wärmeübertragung ist.

Im Stand der Technik (vgl. WO 92/20975 A1) sind Luftheizgeräte bekannt, die über einen Wärmetauscher verfügen. Der Wärmetauscher verfügt dabei über Rippen, die der Übertragung der thermischen Energie vom Rauchgas auf die zu erwärmende Luft dienen. In der verwendeten Heizquelle wird dabei ein Luft-Gas-Gemisch verbrannt. Andere Ausgestaltungen von Wärmetauschern sind offenbart in der DE 199 02 050 A1,der EP3269572A2, der KR 101 880 932 B1, der KR 2016 0114860 A, DE 10 2011 085076 A1, der WO 2011/029826 A2 oder der DE 10 2006 025 320 A1.

Die vorbezeichneten Heizgeräte finden beispielsweise in bewegten Räumen, wie sie durch Wohnmobile, Wohnwagen oder Boote gegeben sind, Anwendung.

Soll die Heizleistung bei solchen Geräten erhöht werden, so ist es beispielsweise erforderlich, die Heizquelle größer zu dimensionieren, wodurch auch die Gesamtabmessungen zunehmen. Dies ist jedoch bei den bewegten Räumen in der Regel ungünstig.

Die der Erfindung zugrundeliegende Aufgabe besteht daher darin, eine Verbesserung von solchen Heizvorrichtungen vorzuschlagen, die beispielsweise auch eine möglichst einfache Erhöhung der Heizleistung erlaubt.

Die Erfindung löst die Aufgabe mit einer Heizvorrichtung zum Erwärmen von Luft, mit mindestens einer Heizquelle und mit mindestens einem Wärmetauscher, wobei der Wärmetauscher von der Heizquelle erzeugte thermische Energie auf die Luft überträgt, und wobei der Wärmetauscher mindestens ein Halteelement zur Aufnahme eines elektrischen Heizelements aufweist.

Die Heizvorrichtung verfügt somit über einen Wärmetauscher mit mindestens einem Halteelement, das der Aufnahme eines elektrischen Heizelements dienen soll. Somit kann also über ein solches elektrisches Heizelement beispielsweise die Heizleistung der Heizvorrichtung durch die zusätzlich elektrisch erzeugte Wärme verstärkt werden.

Der Wärmetauscher ist dabei je nach Ausgestaltung einteilig oder mehrteilig ausgeführt. Bei der mehrteiligen Variante besteht dabei ein mechanischer und/oder direkt thermischer Kontakt zwischen den Teilen des Wärmetauschers oder die Teile sind voneinander getrennt ausgestaltet und angeordnet. Die mehrteilige Ausführung ist vorzugsweise derartig, dass die Teile im Wesentlichen gleiche oder ähnliche Formen aufweisen.

Gemäß einer Ausgestaltung verfügt der Wärmetauscher über mehrere, insbesondere radial nach innen oder radial nach außen führende Rippen oder Finnen. Die Rippen verfügen die für die Wärmeübertragung wirksame Fläche. Zudem bilden sich zwischen den Rippen Kanäle, durch die die Luft geführt wird. Dabei ist in einer Ausgestaltung der Wärmetauscher zylindrisch ausgestaltet, wobei sich die Rippen über die gesamte Länge der Außen- oder Innenseite entlangziehen. In dem Fall, dass der Wärmetauscher mehrteilig aus mehreren Komponenten ausgeführt ist, stehen sich gegebenenfalls Rippen der einzelnen Komponenten gegenüber oder berühren sich teilweise auch.

Eine Ausgestaltung besteht darin, dass das Halteelement zur Aufnahme eines stabförmigen elektrischen Heizelements ausgestaltet ist. In dieser Ausgestaltung wird ein stabförmiges elektrisches Heizelement durch das Halteelement gehalten. Das Heizelement kann in einer Ausgestaltung auch nur abschnittsweise stabförmig ausgeführt sein.

Eine Ausgestaltung gemäß der Erfindung sieht vor, dass der Wärmetauscher einen Innenraum zur Aufnahme einer primären Heizquelle umfasst, und dass das Halteelement zur Aufnahme des elektrischen Heizelements als sekundäre Heizquelle dient. Die primäre Heizquelle ist erfindungsgemäß ein Gas- oder Dieselbrenner. Erfindungsgemäß umgibt der Wärmetauscher die zentral angeordnete primäre Heizquelle. Das elektrische Heizelement ergänzt somit die primäre Heizquelle. Dies wird in einer Ausgestaltung dadurch unterstrichen, dass das elektrische Heizelement und/oder die Komponente des Wärmetauschers, der das Halteelement aufweist, nachträglich eingebracht werden kann.

Erfindungsgemäß weist der Wärmetauscher mehrere Halteelemente auf, wobei die Halteelemente radial beabstandet um den Innenraum angeordnet sind. Die Halteelemente sind somit derartig um den Innenraum für eine primäre Heizquelle angeordnet, dass sich quasi Satelliten für mindestens ein elektrisches Heizelement oder entsprechend für mehrere elektrische Heizelemente ergeben.

In einer Ausgestaltung hat der Innenraum eine im Wesentlichen zylindrische Kontur. Die Grundfläche des Zylinders ist beispielsweise eine Kreisfläche. Dabei können in einer Ausgestaltung Rippen des Wärmetauschers in den zylindrischen Innenraum hineinragen. In einer Ausgestaltung hat der Wärmetauscher entsprechend auch eine längliche und/oder zylindrische Kontur.

Die folgenden Ausgestaltungen beziehen sich teilweise darauf, dass der Wärmetauscher mehrteilig und zumindest aus zwei Teilen, Einheiten oder Komponenten besteht. Die Einheiten fügen sich dabei je nach Ausführung zu einem reversibel verbundenen Wärmetauscher zusammen oder sind nicht miteinander mechanisch kontaktiert. Dabei kann davon ausgegangen werden, dass über die Luft als Mittler alle Einheiten zumindest thermisch mittelbar kontaktiert sind.

Eine Ausgestaltung besteht darin, dass die Heizvorrichtung ein Gehäuse aufweist, dass der Wärmetauscher aus einer ersten Wärmetauschereinheit und mindestens einer zweiten Wärmetauschereinheit besteht, dass das Gehäuse und die erste Wärmetauschereinheit einen Luftkanal für die zu erwärmende Luft begrenzen, und dass die erste Wärmetauschereinheit so in dem Gehäuse angeordnet ist, dass mindestens die zweite Wärmetauschereinheit in den Luftkanal einbringbar ist.

In dieser Ausgestaltung besteht der Wärmetauscher aus mindestens aus zwei Wärmetauschereinheiten. Die erste Wärmetauschereinheit ist so dimensioniert und ist so in einem Gehäuse, das den Wärmetauscher umgibt, angeordnet, dass ausreichend Raum im Inneren des Gehäuses verbleibt, sodass die mindestens eine zweite Wärmetauschereinheit in das Gehäuse eingebracht werden kann. Die zweite Wärmetauschereinheit wird somit in dem Luftkanal eingebracht, der sich zwischen dem Gehäuse und der ersten Wärmetauschereinheit befindet und der von der zu erwärmenden Luft durchströmt wird. Dabei ist in einer Ausgestaltung die erste Wärmetauschereinheit größer als die zweite Wärmetauschereinheit dimensioniert.

Eine Ausgestaltung sieht vor, dass der Wärmetauscher aus der ersten Wärmetauschereinheit und mehreren zweiten Wärmetauschereinheit besteht, und dass die erste Wärmetauschereinheit so in dem Gehäuse angeordnet ist, dass die mehreren zweiten Wärmetauschereinheiten - vorzugsweise symmetrisch zueinander - in den Luftkanal einbringbar sind.

In dieser Ausgestaltung befindet sich im Luftkanal zwischen der Innenwandung des Gehäuses und der ersten Wärmetauschereinheit ausreichend Platz, sodass mehr als eine zweite Wärmetauschereinheit eingebracht werden kann. Die zweiten Wärmetauschereinheiten werden dabei in einer Ausgestaltung insbesondere symmetrisch zueinander und/oder symmetrisch zu der ersten Wärmetauschereinheit eingebracht.

Eine Ausgestaltung besteht darin, dass das elektrische Heizelement umgeben von einer Isolation in dem Halteelement eingepresst ist. Diese Ausgestaltung bewirkt, dass die Halteelemente und das jeweilige elektrische Heizelement eine gemeinsame Einheit bilden. Dies vereinfacht die Fertigung und das Handhaben der Bauteile.

Eine Ausgestaltung sieht vor, dass der Wärmetauscher aus einer ersten Wärmetauschereinheit und mindestens einer zweiten Wärmetauschereinheit besteht, und wobei die erste Wärmetauschereinheit und die mindestens eine zweite Wärmetauschereinheit frei von einem thermischen Kontakt miteinander sind. In dieser Ausgestaltung besteht kein unmittelbarer thermischer Kontakt zwischen der ersten und mindestens einer zweiten Wärmetauschereinheit. So besteht beispielsweise eine thermische Isolation oder ein ausreichend großer Abstand. In einer ergänzenden Ausgestaltung sind auch alle zweiten Wärmetauschereinheiten, falls mehrere vorhanden sind, frei von einem thermischen Kontakt (oder alternativ einer thermischen Kopplung).

Eine Ausgestaltung besteht darin, dass der Wärmetauscher aus einer ersten Wärmetauschereinheit und mindestens einer zweiten Wärmetauschereinheit besteht, und dass die erste Wärmetauschereinheit und die mindestens eine zweite Wärmetauschereinheit in einem thermischen Kontakt miteinander sind. Der thermische Kontakt bewirkt eine unmittelbare thermische Kopplung, die in einer Ausgestaltung auch zwischen mehreren oder allen zweiten Wärmetauschereinheiten besteht.

Eine Ausgestaltung sieht vor, dass der Wärmetauscher aus einer ersten Wärmetauschereinheit und mindestens einer zweiten Wärmetauschereinheit besteht, dass die zweite Wärmetauschereinheit die erste Wärmetauschereinheit konzentrisch umgibt, und dass radial nach außen ragende Rippen der ersten Wärmetauschereinheit und radial nach innen ragende Rippen der zweiten Wärmetauschereinheit so ausgestaltet und angeordnet sind, dass die Rippen der ersten Wärmetauschereinheit zwischen die Rippen der zweiten Wärmetauschereinheit einbringbar sind. In dieser Ausgestaltung sind die Aussparungen oder Lücken zwischen den Rippen der einen Wärmetauschereinheit so ausgeführt, dass gerade die Rippen der gegenüberliegenden Wärmetauschereinheit hineinpassen. Über den Umfang ergibt sich somit ein Wechsel der unterschiedlichen Rippen. Dabei können auch - je nach Ausgestaltung - die Rippen der gleichen Wärmetauschereinheit aufeinander folgen. Dies also z. B. für den Fall, dass der Abstand zwischen den benachbarten Rippen der einen Wärmetauschereinheit größer ist als der Abstand zwischen den benachbarten Rippen der anderen Wärmetauschereinheit.

Eine Ausgestaltung besteht darin, dass der Wärmetauscher aus einer ersten Wärmetauschereinheit und mindestens einer zweiten Wärmetauschereinheit besteht, und dass die erste Wärmetauschereinheit und die zweite Wärmetauschereinheit zueinander korrespondierende Kontaktprofile für eine lösbare mechanische und/oder direkte thermische Verbindung aufweisen. Die korrespondierenden Kontaktprofile, die jeweils zueinander passen, erlauben eine erhöhte Stabilität, eine sichere Verbindung oder auch eine vereinfachte Fertigung.

Eine Ausgestaltung sieht vor, dass der Wärmetauscher aus einer ersten Wärmetauschereinheit und mindestens einer zweiten Wärmetauschereinheit besteht, und dass mindestens ein Halteelement durch die erste Wärmetauschereinheit und die zweite Wärmetauschereinheit gebildet ist. In dieser Ausgestaltung verfügen die erste Wärmetauschereinheit und mindestens eine zweite Wärmetauschereinheit über Teilstrukturen eines Halteelements, die sich gemeinsam zu einem Halteelement ergänzen.

Eine Ausgestaltung besteht darin, dass der Wärmetauscher aus einer ersten Wärmetauschereinheit und mindestens einer zweiten Wärmetauschereinheit besteht, und dass die erste Wärmetauschereinheit und die mindestens eine zweite Wärmetauschereinheit lösbar miteinander verbunden sind. In dieser Ausgestaltung besteht eine reversible Verbindung zwischen den Wärmetauschereinheiten. Alternativ sind eine erste Wärmetauschereinheit und mindestens eine zweite Wärmetauschereinheit irreversibel miteinander verbunden.

Eine Ausgestaltung sieht vor, dass mindestens ein Platzhalter vorgesehen ist, und dass der Platzhalter anstelle des elektrischen Heizelements in das Halteelement einbringbar ist. Durch den Platzhalter stellt sich beispielsweise eine Strömung der Luft ein, die der entspricht, wenn das Heizelement eingebracht ist. Daher lässt sich beispielsweise eine Struktur für die Führung der Luft optimieren. Weiterhin kann auch die gleiche Gewichtsverteilung erzeugt werden.

Eine Ausgestaltung besteht darin, dass mindestens zwei Halteelemente vorhanden sind, und dass ein gebogenes elektrisches Heizelement von den mindestens zwei Halteelementen gehalten ist. In dieser Ausgestaltung wird ein Heizelement von mehreren Halteelementen gehalten. Dies setzt darauf auf, dass das Heizelement einen entsprechend gebogenen Verlauf aufweist, sodass das Heizelement durch mehrere Halteelemente passieren kann.

Eine Ausgestaltung sieht vor, dass das mindestens eine Halteelemente eine ringförmige und sich mindestens auf einer Seite öffnende Form aufweist, und dass das Halteelement eine elastische Aufweitung der Öffnung für die Aufnahme des elektrischen Heizelements aufweist. In dieser Ausgestaltung ist das Halteelement so ausgestaltet, dass das Heizelement quasi eingeklipst werden kann. Dies vereinfacht die Fertigung oder auch das nachträgliche Einbringen des Heizelements bei einer z. B. schon eingebauten Heizvorrichtung.

Eine Ausgestaltung besteht darin, dass die Heizvorrichtung zur Verwendung in einem beweglichen Raum - insbesondere in einem Wohnwagen oder einem Wohnmobil - ausgestaltet ist.

Eine Ausgestaltung sieht vor, dass der Wärmetauscher zumindest teilweise ein Strangpressteil ist. Die Ausführung als Strangpressteil reduziert die Kosten und führt auch zu sehr reproduzierbaren Bauteilen.

Allgemein kann durch den besonderen Wärmetauscher auch nachträglich noch ein elektrisches Heizelement eingebracht werden. Zudem wird durch das Halteelement jedoch auch die Fertigung einer Heizvorrichtung vereinfacht, die z. B. über einen Gas- oder Dieselbrenner und mindestens ein elektrische Heizelement verfügt.

Im Einzelnen gibt es eine Vielzahl von Möglichkeiten, die erfindungsgemäße Heizvorrichtung auszugestalten und weiterzubilden. Dazu wird verwiesen einerseits auf die dem Patentanspruch 1 nachgeordneten Patentansprüche, andererseits auf die folgende Beschreibung von Ausführungsbeispielen in Verbindung mit der Zeichnung. Es zeigen:
- Fig. 1: eine schematische Darstellung einer Heizvorrichtung gemäß dem Stand der Technik,
- Fig. 2: einen Schnitt durch eine schematische Darstellung einer ersten Ausgestaltung einer erfindungsgemäßen Heizvorrichtung,
- Fig. 3: einen Schnitt durch eine schematische Darstellung einer zweiten Ausgestaltung einer erfindungsgemäßen Heizvorrichtung,
- Fig. 4: einen Schnitt durch eine schematische Darstellung einer dritten Ausgestaltung einer erfindungsgemäßen Heizvorrichtung,
- Fig. 5: a) und b) einen Schnitt durch eine schematische Darstellung einer vierten Ausgestaltung einer erfindungsgemäßen Heizvorrichtung in zwei unterschiedlichen Bestückungszuständen,
- Fig. 6: einen Schnitt durch eine erste Ausgestaltung eines erfindungsgemäßen Wärmetauschers,
- Fig. 7: einen Schnitt durch eine zweite Ausgestaltung eines erfindungsgemäßen Wärmetauschers und
- Fig. 8: einen Schnitt durch eine dritte Ausgestaltung eines erfindungsgemäßen Wärmetauschers.

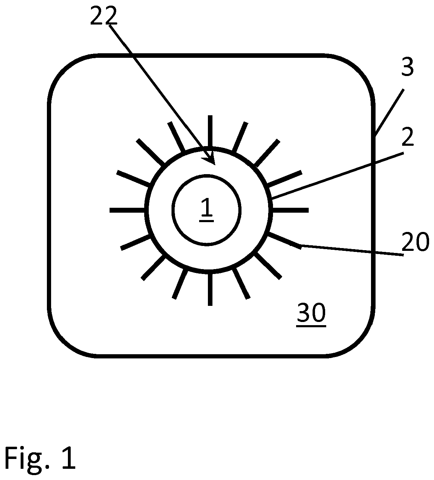

Die Fig. 1 zeigt einen Schnitt durch eine schematische Heizvorrichtung gemäß dem Stand der Technik.

Die Heizquelle 1 wird gebildet durch eine Brennkammer, in der ein Luftgasgemisch verbrannt wird. Die sich dabei ergebenden Verbrennungsgase werden durch einen Heizraum und dann durch ein - hier nicht dargestelltes - Abgassystem abgeführt.

Die im Wesentlichen zylindrische Heizquelle 1 wird von einem Wärmetauscher 2 umgeben. Hierfür umfasst der Wärmetauscher 2 einen Innenraum 22, der der Aufnahme der Heizquelle 1 dient. Der Wärmetauscher 2 überträgt die thermische Energie der Heizquelle 1 - oder speziell der Verbrennungs- oder Rauchgase - auf Luft, die z. B. über ein - hier nicht dargestelltes - Gebläse an der Außenseite des Wärmetauschers 2 entlanggeführt wird. Der Wärmetauscher 2 verfügt an seiner Außenseite über eine Mehrzahl von Rippen 20 oder Finnen, die die für die Wärmeübertragung wirksame Oberfläche vergrößern und zwischen denen sich Kanäle für die Luft bilden.

Der Wärmetauscher 2 ist von einem Gehäuse 3 umgeben, das auch den Luftkanal 30 mitdefiniert, durch den die Luft um den Wärmetauscher 2 herum geführt wird.

Die folgenden Figuren zeigen jeweils Schnitte durch erfindungsgemäße Heizvorrichtungen. Für die Übersichtlichkeit ist die Darstellung stark vereinfacht. So wird beispielsweise von den unterschiedlichen Wärmetauschern 2 nur die Außenseite gezeigt und beschrieben. Je nach Ausführungen können dabei jedoch auch z. B. Rippen nach innen vorhanden sein oder die - nach innen oder außen ragenden - Rippen können besonders ausgestaltete Oberflächen oder Konturen aufweisen.

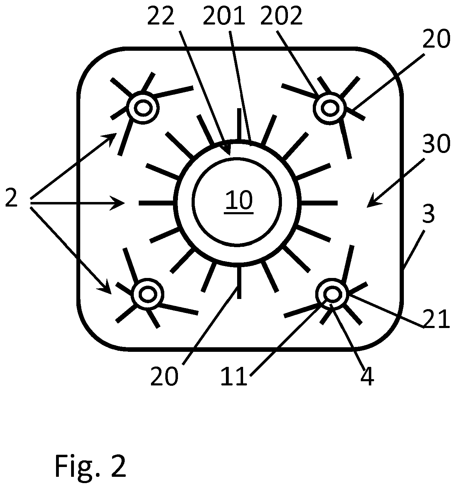

Die Fig. 2 zeigt einen Schnitt durch eine schematische Darstellung einer ersten Ausgestaltung der erfindungsgemäßen Heizvorrichtung. Im Allgemeinen hat der Wärmetauscher 2 eine längliche oder zylindrische Erstreckung.

In dem Gehäuse 3 befindet sich ein Wärmetauscher 2, der hier aus insgesamt fünf Wärmetauschereinheiten 201, 202 besteht: Dabei handelt es sich um eine erste Wärmetauschereinheit 201 und vier zweite Wärmetauschereinheiten 202.

Die erste Wärmetauschereinheit 201 weist einen Innenraum 22 auf, der eine primäre Heizquelle 10 in Form eines Gasbrenners gemäß dem Stand der Technik umfasst. Dies entspricht somit der Ausgestaltung, wie sie in Bezug auf die Fig. 1 dargestellt und beschrieben ist.

Zwischen der ersten Wärmetauschereinheit 201 und der Innenwandung des umgebenden Gehäuses 3 befindet sich ein Luftkanal 30, durch den die zu erwärmende Luft geführt wird.

Für die Ergänzung der primären Heizquelle 10 durch die in der dargestellten Ausführung vier sekundäre Heizquellen 11 in Form von Heizstäben sind die vier zweiten Wärmetauschereinheiten 202 vorgesehen. Alternativ sind z. B. zwei, sechs, acht usw. sekundäre Heizquellen 11 vorhanden. Ganzzahlige Vielfache von zwei werden für den symmetrischen Aufbau und/oder eine symmetrische Wärmeverteilung favorisiert. Die vier zweiten Wärmetauschereinheiten 202 sind so in den Luftkanal 30 um die erste Wärmetauschereinheit 202 herum eingebracht, dass sie quasi die Lücken zwischen der ersten Wärmetauschereinheit 201 und der Innenwandung des Gehäuses 3 ausfüllen. Dieses Einbringen ist in der dargestellten Ausgestaltung dadurch vereinfacht, dass das Gehäuse 3 einen rechteckigen Innenraum umfasst und dass die erste Wärmetauschereinheit 201 mit ihren Rippen 20 einen kreisförmigen Querschnitt bildet.

Die erste Wärmetauschereinheit 201 und die zweiten Wärmetauschereinheiten 202 sowie die zweiten Wärmetauschereinheiten 202 untereinander sind hier frei von einem thermischen Kontakt miteinander, sodass in der dargestellten Ausführung keine thermische Energieübertragung zwischen den Wärmetauschereinheiten 201, 202 selbst stattfindet.

Die zweiten Wärmetauschereinheiten 202 verfügen jeweils über fünf Rippen 20 und ein ringförmiges Halteelement 21. Zwischen den Rippen 20 der zweiten Wärmetauschereinheiten 202 kann die zu erwärmende Luft zirkulieren. Zudem wird durch diese Rippen 20 die Wechselwirkungsoberfläche vergrößert. Die elektrischen Heizelemente 11 in den Halteelementen 21 sind jeweils von einer thermisch leitfähigen Isolation 4 umgeben. Die elektrischen Heizelemente 11, z. B. eine Heizwendel, und die Isolation 4 sind in einer Ausgestaltung durch ein passendes Presswerkzeug zu einer fertigen Einheit verbunden.

In einer alternativen Ausgestaltung ist das Heizelement 11 ohne Isolation in dem Halteelement 21 eingelegt.

In einer Ausgestaltung wird anstelle von zwei separaten elektrischen Heizelementen 11 ein U-förmig gebogener Heizstab verwendet, auf den jeweils zwei zweite Wärmetauschereinheiten 202 aufgeschoben werden.

Die zweiten Wärmetauschereinheiten 202 werden hier mit den elektrischen Heizelementen 11 nach der ersten Wärmetauschereinheit 201 eingebracht und erlauben somit eine Erhöhung der Heizleistung.

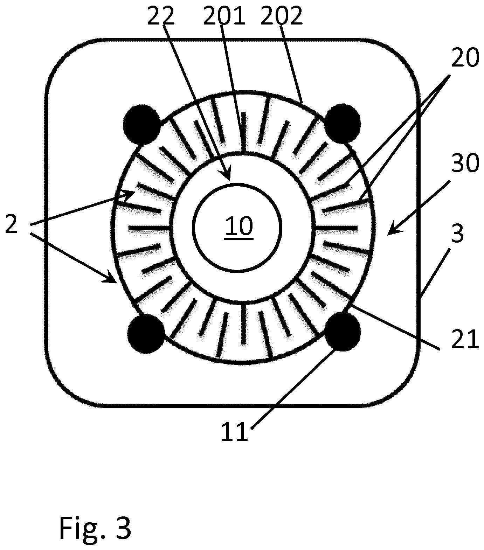

In der Ausgestaltung der Fig. 3 sind eine erste Wärmetauschereinheit 201 und eine zweite Wärmetauschereinheit 202 als Teile des Wärmetauschers 2 vorhanden.

Die zwei Wärmetauschereinheiten 201, 202 verfügen jeweils über einen kreiszylindrischen Grundkörper, der im Schnitt als Ring erscheint. Dabei umgibt die zweite Wärmetauschereinheit 202 die erste Wärmetauschereinheit 201 koaxial. Innerhalb der ersten Wärmetauschereinheit 201 besteht weiterhin der Innenraum 22 für die primäre Heizquelle 10.

Auf dem Grundkörper der zweiten Wärmetauschereinheit 202, der somit als Halteelement 21 fungiert, befinden sich vier (in alternativen Ausgestaltungen: eine beliebige andere Anzahl) elektrische Heizelemente 11, die symmetrisch auf dem Umfang verteilt sind.

Die sich innen befindende erste Wärmetauschereinheit 201 weist radial nach außen laufende Rippen 20 auf. Die umfassende zweite Wärmetauschereinheit 202 verfügt ebenfalls über Rippen 20, die radial nach innen und somit in Richtung der ersten Wärmetauschereinheit 201 verlaufen. Die Abstände zwischen den Rippen 20 der ersten Wärmetauschereinheit 201 sowie zwischen den Rippen 20 der zweiten Wärmetauschereinheit 202 sind jeweils so bemessen, dass zwischen die Rippen 20 der ersten Wärmetauschereinheit 201 die Rippen der zweiten Wärmetauschereinheit 202 eingebracht werden können. Es wird somit ein direkter mechanischer Kontakt zwischen den Rippen 20 vermieden und bei der Fertigung oder nachträglichen Bestückung können die zwei Wärmetauschereinheiten 201, 202 ineinander geschoben werden.

Der Luftkanal 30 für die zu erwärmende Luft wird somit durch den Raum zwischen der zweiten Wärmetauschereinheit 202 und der Innenwandung des Gehäuses 3 sowie durch den Raum zwischen den Rippen 20 der ersten Wärmetauschereinheit 201 und der zweiten Wärmetauschereinheit 202 gebildet.

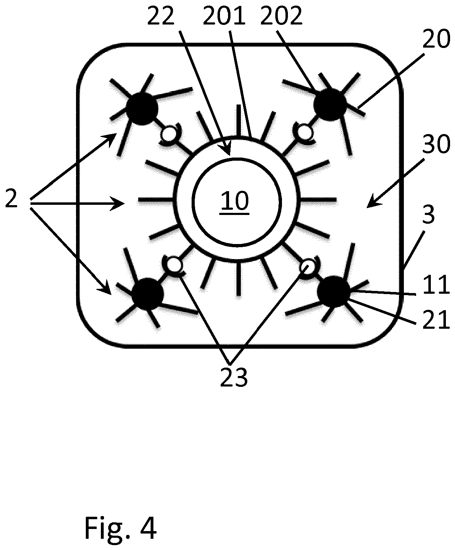

Die Ausgestaltung der Fig. 4 gleicht der Ausgestaltung der Fig. 2.

Gemeinsam ist beiden Ausgestaltungen, dass es eine erste Wärmetauschereinheit 201 mit dem Innenraum 22 für eine primäre Heizquelle 10 und vier zweite Wärmetauschereinheit 201 für jeweils ein elektrisches Heizelement 11 gibt. Die erste Wärmetauschereinheit 201 und die vier zweiten Wärmetauschereinheiten 202 bilden zusammen den Wärmetauscher 2 innerhalb des Gehäuses 3 und umgeben von dem Luftkanal 30 für die zu erwärmende Luft. Für die Übersichtlichkeit sind hier die zweiten Wärmetauschereinheiten 202 - speziell die Halteelemente 21 - und die elektrischen Heizelemente 11 einteilig dargestellt.

Die Ergänzung der Ausgestaltung der Fig. 4 besteht in der mechanischen und vorzugsweise auch thermisch leitfähigen Verbindung zwischen der ersten Wärmetauschereinheit 201 und den vier zweiten Wärmetauschereinheit 202. Diese Verbindung oder direkte Kopplung geschieht hier über zueinander korrespondierende Kontaktprofile 23, die auf den Rippen 20 der ersten Wärmetauschereinheit 201 bzw. denjenigen der zweiten Wärmetauschereinheiten 202 aufgebracht sind. Die betroffenen Rippen 20 verfügen stirnseitig jeweils über Konturen, die in korrespondierende Gegenkonturen eingebracht werden können. Gezeigt sind hier Kombinationen von Profilen (Kugelform) und zugehörigen Negativprofilen (Halbschalen mit zugehörigen Innendurchmessern).

Durch die zweiten Wärmetauschereinheiten 202 werden hier somit über die Kontaktprofile 23 satellitenartige Fortführungen der ersten Wärmetauschereinheit 201 erzeugt.

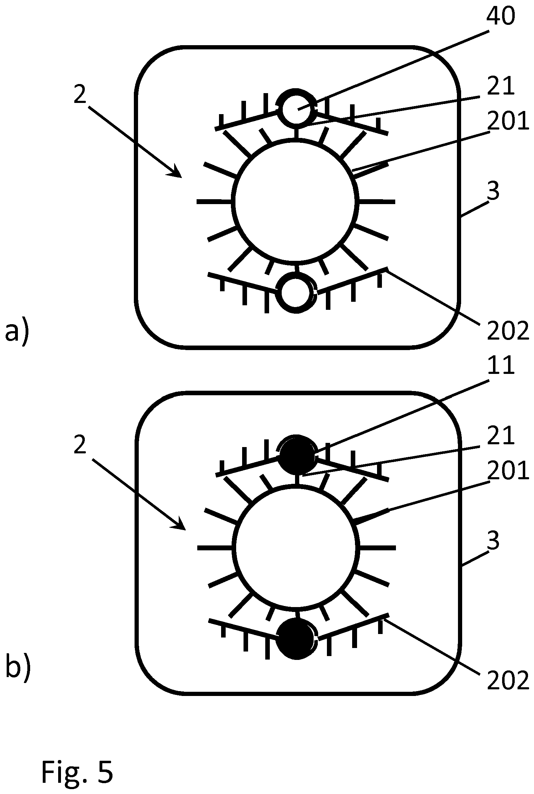

In der Ausgestaltung der Fig. 5 sind eine erste Wärmetauschereinheit 201 und zwei zweite Wärmetauschereinheiten 202 vorhanden. Die drei Wärmetauschereinheiten 201, 202 bilden somit den Wärmetauscher 2 innerhalb des Gehäuses 3.

Die zwei zweiten Wärmetauschereinheiten 202 haben eine solche Rippenstruktur, dass sie die erste Wärmetauschereinheit 201 seitlich weitgehend umfassen. Die beiden zweiten Wärmetauschereinheiten 202 liegen dabei einander gegenüber.

Die Halteelemente 21 sind mittig in den zweiten Wärmetauschereinheiten 202 angeordnet und werden gemeinsam von der ersten Wärmetauschereinheit 201 und den zweiten Wärmetauschereinheiten 202 gebildet. Die Kontaktprofile 23 im Sinne der Ausgestaltung der Fig. 4 werden somit hier durch die gemeinsamen Halteelemente 21 umgesetzt.

In der Fig. 5 a) ist der Fall dargestellt, dass zwar die zweiten Wärmetauschereinheiten 202 mit der ersten Wärmetauschereinheit 201 verbunden und gemeinsam den Wärmetauscher 2 bilden, jedoch befinden sich in den Halteelementen 21 nur Platzhalter 40 für die eigentlichen elektrischen Heizelemente 11.

In der Fig. 5 b) sind anstelle der Platzhalter 40 die elektrischen Heizelemente 11 eingebracht.

Die Platzhalter 40 dienen in dieser Ausgestaltung dazu, dass mit oder ohne Heizelement 11 die gleiche Innengeometrie und auch die gleichen Gewichtsverteilungen in der Heizvorrichtung gegeben sind. Somit bildet sich jeweils beispielsweise das gleiche Strömungsverhalten der Luft innerhalb des Gehäuses 3 aus.

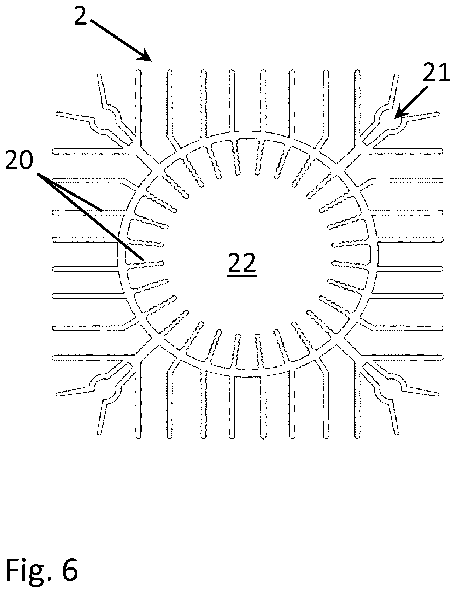

In der Fig. 6 ist ein einteiliger Wärmetauscher 2 dargestellt.

In den Innenraum 22 ragen - hier gewellte - Rippen 20 hinein und ausgehend von dem Ring des Wärmetauschers 2 erstrecken sich weitere Rippen 20 radial nach außen. Die Außenkontur des Wärmetauschers 2 ist durch die Abmessungen der Rippen 20 rechteckig.

Vier Rippen 20 verfügen jeweils über ein Halteelement 21, das es erlaubt, ein elektrisches Heizelement einzulegen.

Das Halteelement 21 ist dabei im Wesentlichen ringförmig und verfügt über eine radial nach außen gerichtete Öffnung. Die Ränder der Öffnung weiten sich radial auf. Dabei sind die Abmessungen der Halteelemente 21 und die Beschaffenheit der betroffenen Rippen so gewählt und aufeinander abgestimmt, dass das Heizelement bei der Fertigung seitlich eingelegt werden kann und dass sich bei einem entsprechenden Druck das Halteelement 21 elastisch aufweitet. So wird das Heizelement aufgenommen und anschließend sicher gehalten.

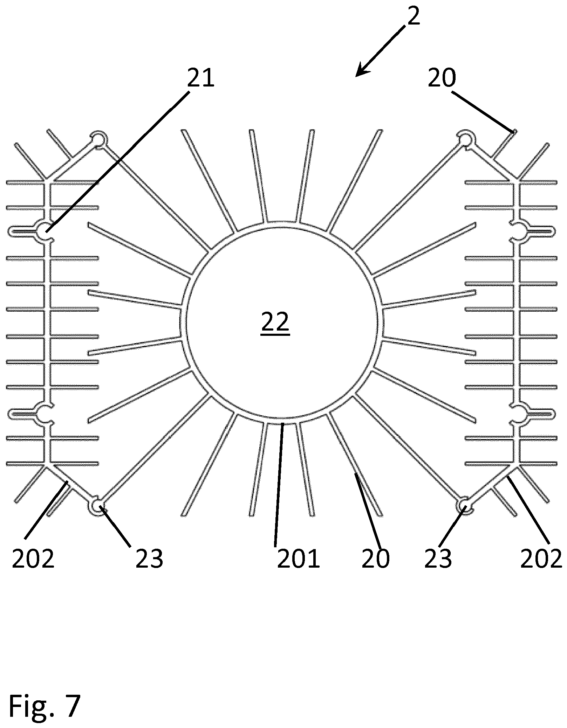

Die Fig. 7 zeigt einen Wärmetauscher 2, der ähnlich der Ausgestaltung der Fig. 5 aus einer ersten Wärmetauschereinheit 201 und zwei zweiten Wärmetauschereinheiten 202 besteht.

Die zwei zweiten Wärmetauschereinheiten 202 liegen dabei einander gegenüber, flankieren damit die erste Wärmetauschereinheit 201 und verfügen über eine längliche Erstreckung. Zudem haben hier die zweiten Wärmetauschereinheiten 202 jeweils zwei Halteelemente 21.

Die erste Wärmetauschereinheit 201 ist wie bei den anderen Ausgestaltungen im Wesentlichen kreiszylindrisch ausgeführt, sodass sich im Schnitt eine Ringform ergibt. Der Ring umfasst den Innenraum 22. Nach außen erstrecken sich radial verlaufende Rippen 20, wobei vier Rippen 20 stirnseitig jeweils über ein Kontaktprofil 23 verfügen.

Die zwei zweiten Wärmetauschereinheiten 202 verfügen an ihren Endbereichen über korrespondierende Kontaktprofile 23, sodass sich zwischen der erste Wärmetauschereinheit 201 und den zweiten erste Wärmetauschereinheiten 202 jeweils ein mechanischer Kontakt herstellen lässt. Die Kontaktprofile 23 bestehen hier aus Kugeln und Halbschalen.

Die zweiten Wärmetauschereinheiten 202 verfügen ebenfalls über Rippen 20, von denen einige in Richtung der ersten Wärmetauschereinheit 201 und einige davon fort gerichtet sind.

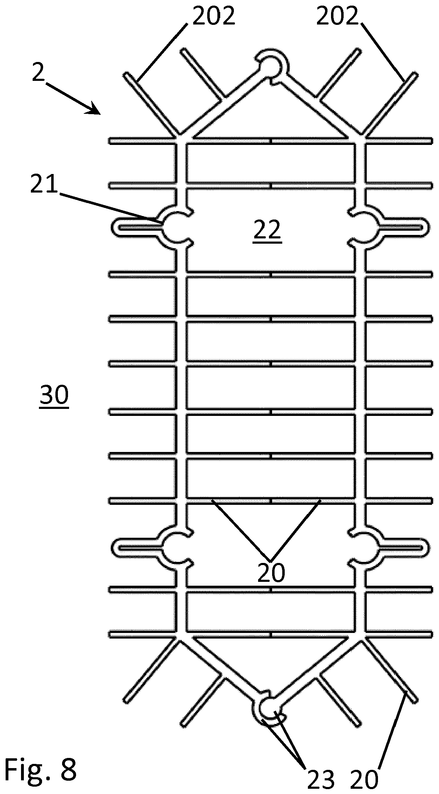

In der Fig. 8 sind die zweiten Wärmetauschereinheiten 202 der Fig. 7 gezeigt, die direkt miteinander verbunden sind und gemeinsam den Wärmetauscher 2 bilden.

Diese Variante erlauben die Kontaktprofile 23, die so ausgeführt sind, dass sie nicht nur mit der ersten Wärmetauschereinheit, sondern auch miteinander verbindbar sind. Daher unterscheiden sich auch die beiden Enden der zweiten Wärmetauschereinheiten 202 in Bezug auf die Form der Kontaktprofile 23.

Die beiden zweiten Wärmetauschereinheiten 202 umschließen einen Innenraum 22, der zusammen mit dem äußeren Luftkanal 30 von der zu erwärmenden Luft durchströmt werden kann. Dabei durchgreifen den Innenraum 22 die nach innen ragenden Rippen 20, die in der gezeigten Ausgestaltung in direktem Kontakt miteinander stehen.

Die vier Halteelemente 21 erlauben das Einbringen von bis zu vier elektrischen Heizelementen, die somit in dieser Ausgestaltung auch die primäre und einzige Heizquelle bilden.

### Bezugszeichenliste

- **1**: Heizquelle
- **2**: Wärmetauscher
- **3**: Gehäuse
- **4**: Isolation
- **10**: Primäre Heizquelle
- **11**: Elektrisches Heizelement
- **20**: Rippe
- **21**: Halteelement
- **22**: Innenraum
- **23**: Kontaktprofil
- **30**: Luftkanal
- **40**: Platzhalter
- **201**: Erste Wärmetauschereinheit
- **202**: Zweite Wärmetauschereinheit

## Patentansprüche

1. Heizvorrichtung zum Erwärmen von Luft,
mit einer primären Heizquelle (10), mit einem Wärmetauscher (2) und mit einem Gehäuse (3),
wobei die Heizvorrichtung zur Verwendung in einem Wohnwagen oder einem Wohnmobil ausgestaltet ist,
wobei es sich bei der primären Heizquelle (10) um einen Gas- oder Dieselbrenner handelt,
wobei der Wärmetauscher (2) die zentral angeordnete primäre Heizquelle (10) umgibt,
wobei der Wärmetauscher (2) einen Innenraum (22) zur Aufnahme der primären Heizquelle (10) umfasst und von der primären Heizquelle (10) erzeugte thermische Energie auf die Luft überträgt, und
wobei der Wärmetauscher (2) mehrere radial beabstandete, um den Innenraum (22) angeordnete Halteelemente (21) zur Aufnahme jeweils eines elektrischen Heizelements (11) als sekundäre Heizquelle (2) aufweist,
**dadurch gekennzeichnet,**
**dass** der Wärmetauscher (2) aus einer ersten Wärmetauschereinheit (201) und mehreren zweiten Wärmetauschereinheiten (202) für jeweils ein elektrisches Heizelement (11) besteht,
**dass** die erste Wärmetauschereinheit (201) und die zweiten Wärmetauschereinheiten (202) zueinander korrespondierende Kontaktprofile (23) für eine lösbare mechanische und/oder direkte thermische Verbindung aufweisen,
**dass** das Gehäuse (3) und die erste Wärmetauschereinheit (201) einen Luftkanal (30) für die zu erwärmende Luft begrenzen, und
**dass** die erste Wärmetauschereinheit (201) so in dem Gehäuse (3) angeordnet ist, dass die mehreren zweiten Wärmetauschereinheiten (202) symmetrisch zueinander in den Luftkanal (30) einbringbar sind.

2. Heizvorrichtung nach Anspruch 1,
wobei mindestens ein Platzhalter (40) vorgesehen ist, und
wobei der Platzhalter (40) anstelle des elektrischen Heizelements (11) in das Halteelement (21) einbringbar ist.

3. Heizvorrichtung nach Anspruch 1 oder 2,
wobei das mindestens eine Halteelement (21) eine ringförmige und sich mindestens auf einer Seite öffnende Form aufweist, und
wobei das Halteelement (21) eine elastische Aufweitung der Öffnung für die Aufnahme des elektrischen Heizelements (11) aufweist.

4. Heizvorrichtung nach einem der Ansprüche 1 bis 3,
wobei das elektrische Heizelement (11) umgeben von einer thermisch leitfähigen Isolation (4) in dem Halteelement (21) eingepresst ist.

## Claims

1. A heating device for heating air,
comprising a primary heat source (10), a heat exchanger (2) and a housing (3),
wherein the heating device is configured for use in a travel trailer or a motorhome,
wherein the primary heat source (10) is a gas or diesel burner,
wherein the heat exchanger (2) surrounds the centrally arranged primary heat source (10),
wherein the heat exchanger (2) comprises an interior space (22) for receiving the primary heat source (10) and transfers thermal energy generated by the primary heat source (10) to the air, and
wherein the heat exchanger (2) includes a plurality of holding elements (21) that are radially spaced apart, arranged around the interior space (22), and serve to receive a respective electric heating element (11) as a secondary heat source (2),
**characterized in that**
the heat exchanger (2) consists of a first heat exchanger unit (201) and a plurality of second heat exchanger units (202), each for a respective electric heating element (11),
**in that** the first heat exchanger unit (201) and the second heat exchanger units (202) include contact profiles (23) corresponding to each other for a releasable mechanical and/or direct thermal connection,
**in that** the housing (3) and the first heat exchanger unit (201) define an air duct (30) for the air to be heated, and
**in that** the first heat exchanger unit (201) is arranged within the housing (3) such that the plurality of second heat exchanger units (202) are insertable into the air duct (30) so as to be symmetrical to each other.

2. The heating device according to claim 1,
wherein at least one placeholder (40) is provided, and
wherein the placeholder (40) is insertable into the holding element (21) instead of the electric heating element (11).

3. The heating device according to claim 1 or 2,
wherein the at least one holding element (21) has an annular shape that opens at least on one side, and
wherein the holding element (21) has an elastic widening of the opening for receiving the electric heating element (11).

4. The heating device according to any of claims 1 to 3,
wherein the electric heating element (11), surrounded by a thermally conductive insulation (4), is pressed into the holding element (21).

## Revendications

1. Dispositif de chauffage pour chauffer de l'air,
présentant une source de chaleur primaire (10) comprenant un échangeur de chaleur (2) et un boîtier (3),
le dispositif de chauffage étant aménagé pour l'utilisation dans une caravane ou un camping-car,
la source de chaleur primaire (10) étant un brûleur à gaz ou diesel,
l'échangeur de chaleur (2) entourant la source de chaleur primaire (10) agencée au centre,
l'échangeur de chaleur (2) comprenant un espace intérieur (22) pour la réception de la source de chaleur primaire (10) et transmettant à l'air de l'énergie thermique produite par la source de chaleur primaire (10), et
l'échangeur de chaleur (2) présentant une pluralité d'éléments de retenue (21) espacés radialement et agencés autour de l'espace intérieur (22) pour la réception d'un élément de chauffage électrique (11) respectif en tant que source de chaleur secondaire (2),
**caractérisé en ce que**
l'échangeur de chaleur (2) est composé d'une première unité d'échangeur de chaleur (201) et d'une pluralité de deuxièmes unités d'échangeur de chaleur (202) pour un élément de chauffage électrique (11) respectif,
**en ce que** la première unité d'échangeur de chaleur (201) et les deuxièmes unités d'échangeur de chaleur (202) présentent des profils de contact correspondants (23) pour une liaison détachable mécanique et/ou directement thermique,
**en ce que** le boîtier (3) et la première unité d'échangeur de chaleur (201) délimitent un canal d'air (30) pour l'air à chauffer, et
**en ce que** la première unité d'échangeur de chaleur (201) est agencée dans le boîtier (3) de telle sorte que les plusieurs deuxièmes unités d'échangeur de chaleur (202) sont aptes à être introduites dans le canal d'air (30) de manière symétrique les unes par rapport aux autres.

2. Dispositif de chauffage selon la revendication 1,
au moins un élément de remplacement (40) étant prévu, et
l'élément de remplacement (40) étant apte à être introduit dans l'élément de retenue (21) à la place de l'élément de chauffage électrique (11).

3. Dispositif de chauffage selon la revendication 1 ou 2,
ledit au moins un élément de retenue (21) présentant une forme annulaire et s'ouvrant au moins d'un côté, et
l'élément de retenue (21) présentant un évasement élastique de l'ouverture pour la réception de l'élément de chauffage électrique (11).

4. Dispositif de chauffage selon l'une des revendications 1 à 3,
l'élément de chauffage électrique (11) étant pressé dans l'élément de retenue (21), entouré d'une isolation thermiquement conductrice (4).
